# EUROPÄISCHE PATENTSCHRIFT

(11) **EP 2 758 693 B1**
(45) Veröffentlichungstag und Bekanntmachung des Hinweises auf die Patenterteilung: **12.08.2015**
(21) Anmeldenummer: 12759108.9
(22) Anmeldetag: 13.09.2012
(51) Int. Cl.: A47L 15/42, D06F 39/08, D06F 58/24

(54) **SCHALTVENTIL MIT EINEM SCHWIMMFÄHIGEN VENTILSCHLIESSKÖRPER UND WASSERFÜHRENDES HAUSHALTSGERÄT MIT EINEM SOLCHEN SCHALTVENTIL**
SWITCHING VALVE COMPRISING A BUOYANT VALVE CLOSING BODY AND WATER-USING HOUSEHOLD APPARATUS COMPRISING SUCH A SWITCHING VALVE
SOUPAPE DE COMMUTATION DOTÉE D'UN CORPS DE FERMETURE FLOTTANT ET APPAREIL MÉNAGER UTILISANT DE L'EAU DOTÉ D'UNE TELLE SOUPAPE DE COMMUTATION

(30) Priorität: 23.09.2011 DE 102011083302
(43) Veröffentlichungstag der Anmeldung: 30.07.2014
(73) Patentinhaber: BSH Hausgeräte GmbH, 81739 München (DE)
(72) Erfinder: EGLMEIER, Hans, 10587 Berlin (DE); PROPPE, Wolfgang, 13589 Berlin (DE)
(86) Internationale Anmeldenummer: PCT/EP2012/067883
(87) Internationale Veröffentlichungsnummer: WO 2013/041432

(56) Entgegenhaltungen:
- EP-A1- 1 088 509
- DE-A1- 19 918 337
- FR-A1- 2 789 451
- US-A1- 2004 112 412

## Beschreibung

Die Erfindung betrifft ein Schaltventil für ein wasserführendes Haushaltsgerät mit einem Ventilraum, zumindest einem in dem Ventilraum angeordneten Ventilschließkörper, einer Betätigungseinrichtung für den Ventilschließkörper, zumindest einem Eingang, einem ersten Ausgang und zumindest einem zweiten Ausgang, wobei der Eingang, der erste Ausgang und der zweite Ausgang dem Ventilraum zugeordnet sind und wobei in einer Betriebslage der Eingang unten an dem Ventilraum angeordnet ist, der erste Ausgang oben an dem Ventilraum angeordnet ist und der zweite Ausgang neben dem ersten Ausgang oben an dem Ventilraum angeordnet ist. Die Erfindung betrifft auch ein wasserführendes Haushaltsgerät, insbesondere ein Wäschebehandlungsgerät zum Waschen von Wäsche, mit einem solchen Schaltventil. Speziell betrifft die Erfindung das Gebiet der Waschmaschinen und Waschtrockner.

Ein Schaltventil und ein wasserführendes Haushaltsgerät der eingangs definierten Gattung gehen hervor aus der DE 199 18 337 A1.

Aus der WO 2011/018385 A1 ist ein wasserführendes Haushaltsgerät mit einem Schaltventil bekannt. Das Schaltventil umfasst einen Ventilraum, in den ein mit einer Eingangsleitung verbundener Eingang mündet. Außerdem sind ein erster Ausgang mit einer ersten Ventilsitzfläche und ein zweiter Ausgang mit einer zweiten Ventilsitzfläche an dem Schaltventil vorgesehen. Eine magnetische Betätigungseinrichtung dient zum Betätigen eines kugelförmigen Ventilschließkörpers des Schaltventils. Der Ventilschließkörper ist dabei in dem Ventilraum angeordnet und wirkt einerseits mit der ersten Ventilsitzfläche und andererseits mit der zweiten Ventilsitzfläche zu einem Dichtsitz zusammen. Die magnetische Betätigungseinrichtung weist Magnetspulen auf, wobei eine der Magnetspulen die erste Ventilsitzfläche umfänglich umschließt und die andere Magnetspule die zweite Ventilsitzfläche umfänglich umschließt. Über eine Steuerung kann ein Sperrventil geöffnet werden, so dass die Eingangsleitung geöffnet ist und Wasser in den Ventilraum einströmt. Das Wasser im Ventilraum steht unter einem gewissen Druck, der den Ventilschließkörper beispielsweise gegen die erste Ventilsitzfläche presst. Die Bestromung der zugeordneten Magnetspule kann nun abgeschaltet werden. Aufgrund des Drucks der Flüssigkeit im Ventilraum wird der Ventilschließkörper dann weiterhin gegen die erste Ventilsitzfläche gepresst, so dass der zwischen der ersten Ventilsitzfläche und dem Ventilschließkörper gebildete Dichtsitz geschlossen ist. Dadurch fließt das Wasser aus der Eingangsleitung über den zweiten Ausgang zu einer Einspülschale.

Das aus der WO 2011/018385 A1 bekannte Haushaltsgerät hat den Nachteil, dass zum Betätigen des einzigen Ventilschließkörpers des Schaltventils zwei Magnetspulen erforderlich sind, die von der Steuerung entsprechend den möglichen Betriebsmodi angesteuert werden müssen. Im Unterschied zu einem mechanisch betätigten Ventilschließkörper, der von einem einzigen elektromagnetischen Aktor betätigt werden kann, ist somit eine weitere Magnetspule erforderlich. Außerdem besteht der Nachteil, dass der gewisse Druck im Ventilraum ausreichend groß sein muss, um den Ventilschließkörper weiterhin gegen die erste Ventilsitzfläche beziehungsweise die zweite Ventilsitzfläche zu pressen, so dass der entsprechende Dichtsitz geschlossen bleibt, wenn die Bestromung der Magnetspule abgeschaltet wird. Somit ist der Einsatzbereich des Schaltventils begrenzt. Speziell kann das Schaltventil daher im Einspülstrang angeordnet sein, wenn es direkt von dem hohen Wasserdruck einer Hausinstallation beaufschlagt wird. An anderen Stellen des wasserführenden Haushaltsgeräts, insbesondere hinter einer Pumpe, ist der Einsatz in der Regel nicht möglich. Beispielsweise wäre eine entsprechend leistungsfähige Pumpe, die den erforderlichen Förderdruck aufbringt, im Hinblick auf die Herstellungskosten nicht wirtschaftlich.

Bei dem aus der WO 2011/018385 A1 bekannten Schaltventil besteht außerdem das Problem einer möglichen Verschmutzung. Wenn der Ventilschließkörper in dem Ventilraum eng geführt ist, was im Hinblick auf eine Abdichtung an der jeweiligen Ventilsitzfläche sinnvoll ist, dann besteht prinzipiell das Problem, dass durch Flusen, Haare oder andere Fremdkörper der Ventilschließkörper blockiert wird. Andererseits besteht bei einer sehr toleranten Führung das Problem, dass entsprechend große Magnetkräfte erforderlich sind, um den Ventilschließkörper präzise an der jeweiligen Ventilsitzfläche zu positionieren und zu halten, um ein zuverlässiges Verschließen des zugeordneten Ausgangs zu erzielen. Die Ausgestaltung eines verschmutzungsunempfindlichen Schaltventils ist somit mit erhöhten Herstellungskosten verbunden und daher in der Regel unwirtschaftlich.

Die DE 199 18 337 A1 offenbart ein Zweiwegeventil zum wahlweisen Ausströmen zweier Flüssigkeitsleitungen. Dabei wird ein Ventilschließkörper entweder durch die Strömung der Flüssigkeit oder seinen Auftrieb in eine der Verschlussstellungen bewegt oder durch Betätigen eines mechanischen Stellelements in die jeweils andere Verschlussstellung bewegt.

Der Nachteil des in der DE 199 18 337 A1 offenbarten Zweiwegeventils ist, dass bei einem schwimmfähigen Ventilkörper eine sichere Ansteuerung desjenigen Ausganges, dessen Verschluss ohne Einflussnahme des Stellelement bewirkt werden muss, nicht gegeben ist. Der Grund ist, dass bei Einströmen von Flüssigkeit in das Ventil der Ventilschließkörper immer aufschwimmt und seine Bahn stets in der Mitte der Oberfläche der einströmenden Flüssigkeit nimmt. Der Ventilaufbau der DE 199 18 337 A1 unterstellt jedoch, dass der Ventilschließkörper in jedem Fall eine senkrechte Bahn nimmt. Tatsächlich würde demnach der Ventilschließkörper eher in die Mitte der beiden Ausgänge aufschwimmen, und seine endgültige Platzierung in einem der Ausgänge wäre mit einer gewissen Zufälligkeit behaftet. Ohne das Stellelement wäre somit eine zuverlässige Ansteuerung des gewünschten Ausgangs nicht möglich.

Aus der DE 87 07 121 U1 ist Schaltventil zum Umschalten eines Fluidstroms bekannt. Das Schaltventil dient für ein wasserführendes Haushaltsgerät und umfasst einen Ventilraum, zumindest einen in dem Ventilraum angeordneten Ventilschließkörper, eine Betätigungseinrichtung für den Ventilschließkörper, einen Eingang, einen ersten Ausgang und einen zweiten Ausgang, wobei der Eingang, der erste Ausgang und der zweite Ausgang dem Ventilraum zugeordnet sind und wobei in einer Betriebslage der Eingang unten an dem Ventilraum angeordnet ist, der erste Ausgang oben an dem Ventilraum angeordnet ist und der zweite Ausgang neben dem ersten Ausgang oben an dem Ventilraum angeordnet ist.

Aus der WO 2007/028741 A1 ist eine Geschirrspülmaschine mit einer Umsteuereinrichtung bekannt. Die Umsteuereinrichtung umfasst ein Steuerglied, mittels dessen ein Ventilkörper aus einer ersten oder einer zweiten Ruheposition in eine instabile Lage zum Verschließen eines der Flüssigkeitsauslässe lenkbar ist.

Eine Aufgabe der Erfindung ist es, ein Schaltventil, das einen verbesserten Aufbau aufweist, und ein wasserführendes Haushaltsgerät mit einem verbesserten Aufbau zu schaffen. Speziell ist es eine Aufgabe der Erfindung, ein Schaltventil und ein wasserführendes Haushaltsgerät mit einem Schaltventil anzugeben, wobei das Schaltventil robust ausgestaltet ist und insbesondere zum Steuern von Abwasserströmen geeignet ist beziehungsweise zum Steuern von Abwasserströmen dient.

Die Aufgabe wird gelöst durch ein Schaltventil für ein wasserführendes Haushaltsgerät sowie ein wasserführendes Haushaltsgerät gemäß entsprechendem unabhängigem Patentanspruch. Durch die in den abhängigen Patentansprüchen oder nachfolgender Beschreibung aufgeführten oder in der beigefügten Zeichnung dargestellten Mittel und Maßnahmen sind vorteilhafte und bevorzugte Weiterbildungen des erfindungsgemäßen Schaltventils und des erfindungsgemäßen Haushaltsgeräts möglich.

Die Aufgabe wird demnach gelöst durch ein Schaltventil für ein wasserführendes Haushaltsgerät mit einem Ventilraum, zumindest einem in dem Ventilraum angeordneten schwimmfähigen Ventilschließkörper, einer Betätigungseinrichtung für den Ventilschließkörper, zumindest einem Eingang, einem ersten Ausgang und zumindest einem zweiten Ausgang, wobei der Eingang, der erste Ausgang und der zweite Ausgang dem Ventilraum zugeordnet sind, wobei in einer Betriebslage der Eingang unten an dem Ventilraum angeordnet ist, der erste Ausgang oben an dem Ventilraum angeordnet ist und der zweite Ausgang neben dem ersten Ausgang oben an dem Ventilraum angeordnet ist, wobei der Ventilraum so ausgestaltet ist, dass der Ventilschließkörper beim Aufschwimmen den ersten Ausgang verschließt und wobei der erste Ausgang in der Betriebslage senkrecht oberhalb des Eingangs angeordnet ist und der Ventilraum eine solche Volumenverteilung aufweist, sodass der Ventilschließkörper beim Aufschwimmen eine senkrechte Bahn verfolgt.

Ferner wird die Aufgabe gelöst durch ein wasserführendes Haushaltsgerät, insbesondere ein Wäschebehandlungsgerät zum Waschen von Wäsche, mit solch einem Schaltventil.

Das erfindungsgemäße Schaltventil ist dazu ausgelegt, von einer Flüssigkeit (z.B. Wasser oder Waschlauge) durchströmt zu werden, wobei die Flüssigkeit von unten nach oben durch den Eingang und jeweils einen der Ausgänge strömt. Dabei kann durch den Ventilschließkörper jeweilig der erste Ausgang (durch Auftrieb allein) oder der zweite Ausgang (hierzu ist die Betätigungseinrichtung vorgesehen) verschlossen werden, wenn die Flüssigkeit einströmt und der Ventilschließkörper aufschwimmt und so gegen jeweils einen der Ausgänge bewegt wird und dort dichtend sitzt, wodurch das Ventil als Zweiwegeventil fungieren kann. Da das erfindungsgemäße Schaltventil einen aufschwimmenden Ventilschließkörper verwendet, ist seine Betriebsposition so zu wählen, dass die Ausgänge sich in einer Richtung des Aufschwimmenden Ventilschließkörpers befinden, sodass die Ausgänge von dem aufschwimmenden Ventilschließkörper durch Aufschwimmen allein oder durch Bewegen durch die Betätigungsvorrichtung erreicht werden können.

Wenn das Haushaltsgerät zur Vorbereitung eines Betriebs beispielsweise in einem Privathaushalt aufgestellt wird und gegebenenfalls vorgesehene Transportsicherungen entfernt sind, dann befindet sich das Haushaltsgerät in einer Betriebslage. In der Betriebslage sind die einzelnen Bauteile des Haushaltsgeräts dann geeignet ausgerichtet, was in der Regel funktionsrelevant ist. Beispielsweise kann in eine Einspülschale geführtes Frischwasser dann durch einen Verbindungskanal nach unten in einen Laugenbehälter laufen. Ferner befindet sich dann auch ein Ausgang des Laugenbehälters an seinem bezüglich der Schwerkraft tiefsten Punkt, so dass über den Ausgang des Laugenbehälters ein Abpumpen der Lauge möglich ist. Das Schaltventil des Haushaltsgeräts ist in Bezug auf diese vorgegebene Betriebslage ausgerichtet. In dieser Betriebslage ist die Funktionsfähigkeit des Schaltventils gegeben. In anderen Lagen, insbesondere in einer aus der Betriebslage um 90° gekippten Lage, ist das Schaltventil nicht notwendigerweise funktionsfähig.

Der Ventilschließkörper ist vorzugsweise kugelförmig, er könnte jedoch auch von der Kugelform ein wenig abweichen, z.B. eiförmig oder ein Ellipsoid sein. Der Durchmesser des Ventilschließkörpers sollte auf die Durchmesser der beiden Ausgänge (erster und zweiter Ausgang), welche sinnvollerweise denselben Durchmesser haben sollten, sinnvoll abgestimmt sein, d.h. einen größeren Durchmesser haben, damit er dichtend die Ausgänge verschließen kann. Vorzugsweise ist der Ventilschließkörper ein Hohlkörper, er kann aber auch gefüllt sein, wenn er aus einem Material mit geringerer Dichte besteht als die Flüssigkeit, in der er aufschwimmen soll. Um von der Betätigungseinrichtung bewegt werden zu können, ist es von Vorteil wenn der Ventilschließkörper entweder selbst magnetisch ist oder ein ferromagnetisches Material enthält. Ein ferromagnetisches Material ist ein Material, das von einem Magneten angezogen werden kann. Dieses Material kann z.B. Eisenspäne (oder Eisenpulver oder Ferritpulver oder dergleichen dem Fachmann bekannte Materialien) enthalten, die zum Beispiel in dem Material des Ventilschließkörpers mit verarbeitet sind. Um eine verbesserte dichtende Wirkung zu erzielen, bietet es sich an, wenn der Ventilschließkörper aus einem weichelastischen Kunststoff gefertigt ist, beispielsweise Silikon, Vollgummi oder dergleichen. Ein derartiger Kunststoff kann durch bekannte Gussverfahren in die gewünschte Form gebracht werden, und ein ferromagnetisches Material kann mit eingegossen werden.

Vorteilhaft ist es, dass der Ventilraum unten von einer auf den Eingang zulaufenden, geneigten Unterseite begrenzt ist. Hierdurch kann der Ventilschließkörper zuverlässig in eine Ruhestellung am Eingang geführt werden, wenn sich im Ventilraum keine Flüssigkeit, insbesondere keine Lauge, befindet und der Ventilschließkörper daher nicht aufschwimmt.

Damit der Ventilschließkörper anders als in der DE 199 18 337 A1 zuverlässig bei Aufschwimmen in immer dieselbe Position gelangt, d.h. für die Zwecke dieser Erfindung den ersten Ausgang verschließt, ist es notwendig, den Ventilraum entsprechend auszugestalten. Dabei ist die eingangs erwähnte Eigenschaft von aufschwimmenden Körpern zu berücksichtigen, sich immer in der Mitte einer Oberfläche einer einströmenden Flüssigkeit zu befinden. Der Grund sind die Strömungsverhältnisse, da eine einströmende Flüssigkeit symmetrisch in einen Hohlraum einströmt.

Es ist also von Vorteil, wenn sich der erste Ausgang, d.h. derjenige Ausgang, der ohne eine Betätigung der Betätigungseinrichtung zuverlässig verschlossen werden soll, oberhalb der Mitte der Oberfläche der Flüssigkeit befindet, wenn die Flüssigkeit den Ventilraum soweit gefüllt hat, dass der Ventilschließkörper den besagten Ausgang annähernd erreicht hat. Im Idealfall ist der erste Ausgang zumindest annähernd senkrecht oberhalb der Ruhestellung des Ventilschließkörpers angeordnet, dann sollte der Ventilraum so ausgestaltet sein, dass die Bahn, die der aufschwimmende Ventilschließkörper während des Einströmens von Flüssigkeit nimmt, eine senkrechte Bahn ist. In diesem Fall sollte der Ventilraum so ausgestaltet sein, dass die Oberfläche der Flüssigkeit ihren Mittelpunkt dort hat, wo sich der erste Ausgang befindet. Die Bahn des aufschwimmenden Ventilkörpers sollte demnach zum ersten Ausgang hinführen. Für den Fachmann stellt es kein Problem dar, einen Ventilraum entsprechend zu gestalten.

Im Folgenden wird vom oben genannten Fall ausgegangen, bei der der erste Ausgang zumindest annähernd senkrecht oberhalb der Ruhestellung des Ventilschließkörpers angeordnet ist. In diesem Fall ist der Ventilraum vorzugsweise symmetrisch ausgestaltet. Es ist hierbei zu berücksichtigen, dass eine volumensymmetrische Ausgestaltung ausreicht. Da der zweite Ausgang notwendigerweise nicht in derselben Position liegen kann wie der erste Ausgang, ist er neben dem ersten Ausgang angeordnet, und es wird somit für den zweiten Ausgang ein bestimmtes Volumen im Ventilraum, im Folgenden als erste Erweiterung bezeichnet, benötigt. Dies ist notwendig, da der Ventilschließkörper durch dieses Volumen zum zweiten Ausgang gelangen können muss. Dieses zusätzliche Volumen muss ausgeglichen werden, damit sich keine Strömungsverhältnisse einstellen, die den Ventilschließkörper vom ersten Ausgang wegführen.

Der Ventilraum weist in einer Richtung von dem ersten Ausgang zu dem zweiten Ausgang eine erste Erweiterung auf und der Ventilraum weist in einer der ersten Richtung entgegengesetzten zweiten Richtung von dem ersten Ausgang aus eine zweite Erweiterung auf, deren Volumen mindestens das der ersten Erweiterung ist. Die über den Eingang zugeführte Flüssigkeit strömt hierdurch sowohl in die erste Erweiterung als auch in die zweite Erweiterung. Hierdurch können am Ventilschließkörper Strömungsverhältnisse erzeugt werden, die sich in ihrer kräftemäßigen Auswirkung auf den Ventilschließkörper zumindest weitgehend kompensieren. Speziell wird hierdurch vermieden, dass der Ventilschließkörper aufgrund einer Strömung der zugeführten Flüssigkeit in die erste Erweiterung und somit gegen den zweiten Ausgang schwimmt.

Außerdem ist es hierbei vorteilhaft, dass eine Führung vorgesehen ist, die zum Führen des aufschwimmenden Ventilschließkörpers an den ersten Ausgang dient. In vorteilhafter Weise umfasst die Führung zumindest eine Rippe. Hierbei ist es auch vorteilhaft, dass die zweite Erweiterung volumenmäßig größer ausgestaltet ist als die erste Erweiterung. Somit wird eine auf den Ventilschließkörper effektiv wirkende Kraft in der ersten Richtung verhindert. Das heißt, wenn die zweite Erweiterung größer ausgestaltet ist als die erste Erweiterung, dann wird der aufschwimmende Ventilschließkörper eher weggeleitet vom zweiten Ausgang. Die besagten Führungen verhindern aber, dass der Ventilschließkörper den ersten Ausgang in Richtung der gegenüberliegenden Seite des zweiten Ausgangsverfehlt, und leiten ihn zum ersten Ausgang hin.

Diese Führung ist aber optional, denn bei einer oben erläuterten Ausgestaltung des Ventilraums wird die einströmende Flüssigkeit den auf ihrer Oberfläche aufschwimmenden Ventilschließkörper zuverlässig an den ersten Ausgang befördern.

Zusätzlich oder alternativ ist es vorteilhaft, dass die Führung eine Verengung in dem Ventilraum bildet, die den Ventilschließkörper am Eindringen in die zweite Erweiterung hindert. Bei dieser Ausgestaltung kann eine vorzugsweise kleine effektive Kraft in der zweiten Richtung auf den Ventilschließkörper durch die einströmende Flüssigkeit erzeugt werden. Durch diese Kraft wird der Ventilschließkörper beim Aufschwimmen an der Führung gehalten. Somit ergibt sich eine zuverlässige Führung des Ventilschließkörpers zwischen dem Eingang und dem ersten Ausgang, wenn die Betätigungseinrichtung deaktiviert ist.

Um nun den Ventilschließkörper auch gegen den zweiten Ausgang bewegen zu können, ist eine Betätigungseinrichtung vorgesehen. Vorteilhaft ist es, dass die Betätigungseinrichtung zum Bewegen des Ventilschließkörpers gegen den zweiten Ausgang dient, während der Ventilschließkörper aufschwimmt. Bei einer Betätigung, die vorzugsweise durch eine magnetische Kraft erfolgt, reicht zum Betätigen des aufschwimmenden Ventilschließkörpers dann eine relativ kleine Kraft aus, da der Ventilschließkörper nicht aus seiner Ruhestellung an den zweiten Ausgang bewegt werden muss, sondern aus einer Position, die er während des Aufschwimmens eingenommen hat, was den Weg zum zweiten Ausgang verkürzt hat.

Vorteilhaft ist es, dass die Betätigungseinrichtung als magnetische Betätigungseinrichtung ausgebildet ist, dass der Ventilschließkörper von der Betätigungseinrichtung magnetisch anziehbar ist und dass die magnetische Betätigungseinrichtung im Bereich des zweiten Ausgangs und bevorzugt der ersten Erweiterung angeordnet ist.

Die magnetische Betätigungseinrichtung kann beispielsweise eine Spule aufweisen, die zum Betätigen des Ventilschließkörpers bestromt wird. Der geeignet ausgestaltete Ventilschließkörper wird dann von der magnetischen Betätigungseinrichtung angezogen. Wenn Flüssigkeit in den Ventilraum geführt wird, dann schwimmt der Ventilschließkörper auf und kann somit in die erste Erweiterung schwimmen und dann den zweiten Ausgang verschließen.

Hierbei erfolgt eine Abstimmung in Bezug auf die Anziehungskraft der Betätigungseinrichtung auf den Ventilschließkörper und der Zeitdauer, die der Ventilschließkörper zum Aufschwimmen benötigt, bis er oben am Ventilraum anstößt. Diese Zeitdauer kann durch ein langsames Zuführen der Flüssigkeit und/oder durch ein zwischenzeitliches Unterbrechen der Flüssigkeitszufuhr weitgehend beliebig verlängert werden. Bei der Ausgestaltung eines wasserführenden Haushaltsgeräts mit einer Pumpe, an deren Förderseite der Eingang des Schaltventils angeschlossen ist, kann in vorteilhafter Weise eine Pumpe mit variabler Förderleistung vorgesehen sein. Beispielsweise kann die Pumpe von einem bürstenlosen Gleichstrommotor angetrieben sein, der eine gezielte Einstellung des Volumenstroms der Pumpe ermöglicht, was beispielsweise bei einem Synchronmotor nicht möglich ist.

Vorteilhaft ist es auch, dass an dem Eingang eine asymmetrische Auflage für den Ventilschließkörper vorgesehen ist, die ein vollständiges Verschließen des Eingangs von dem Ventilschließkörper verhindert. Hierdurch wird ein Verschließen des Eingangs von dem Ventilschließkörper verhindert, so dass ein Rückstrom der Flüssigkeit aus dem Ventilraum über den Eingang des Schaltventils möglich ist. Dies ermöglicht die genannte Ruhestellung des Ventilschließkörpers am Eingang des Ventilraums.

Das erfindungsgemäße Schaltventil ist bevorzugt als Zweiwegeventil ausgebildet. Es ist aber auch denkbar, ein Dreiwegeventil oder eines mit mehr Ausgängen vorzusehen. Dann ist es allerdings notwendig, die Anzahl oder die Art der Betätigungseinrichtung zu variieren, um die Bahn des aufschwimmenden Ventilschließkörpers in weitere Richtungen abzulenken.

Ein erfindungsgemäßes Schaltventil hat einen sehr einfachen Aufbau und ist daher sehr geeignet für die Steuerung von Flüssigkeitsströmen, speziell in wasserführenden Haushaltsgeräten wie Waschmaschinen, Wäschetrocknern oder Waschvolltrocknern oder auch Geschirrspülmaschinen. Besonders in solchen Geräten, bei denen eine Wasserwiederverwendung erfolgen soll, kann durch Umschalten des Ventils der abgepumpte Flüssigkeitsstrom umgeleitet werden, z.B. in einen Vorratsbehälter oder zurück in den Behandlungsraum des Geräts.

Daher betrifft die Erfindung auch ein wasserführendes Haushaltsgerät, das ein erfindungsgemäßes Schaltventil aufweist.

Bevorzugte Ausführungsbeispiele der Erfindung sind in der nachfolgenden Beschreibung anhand der Figuren der beigefügten Zeichnung, in denen sich entsprechende Elemente mit übereinstimmenden Bezugszeichen versehen sind, näher erläutert. Es zeigen:
- Fig. 1: ein wasserführendes Haushaltsgerät mit einem .Schaltventil in einer auszugsweisen, schematischen Darstellung entsprechend einem Ausführungsbeispiel und
- Fig. 2: einen auszugsweisen, schematischen Schnitt durch das in Fig. 1 dargestellte Schaltventil des wasserführenden Haushaltsgeräts des Ausführungsbeispiels entlang der mit II bezeichneten Schnittlinie,
- Fig. 3: eine perspektivische Ansicht eines Unterteils eines Schaltventils gemäß einer Ausführungsform,
- Fig. 4: eine perspektivische Ansicht eines Oberteils des Schaltventils gemäß derselben Ausführungsform wie in Fig. 3.

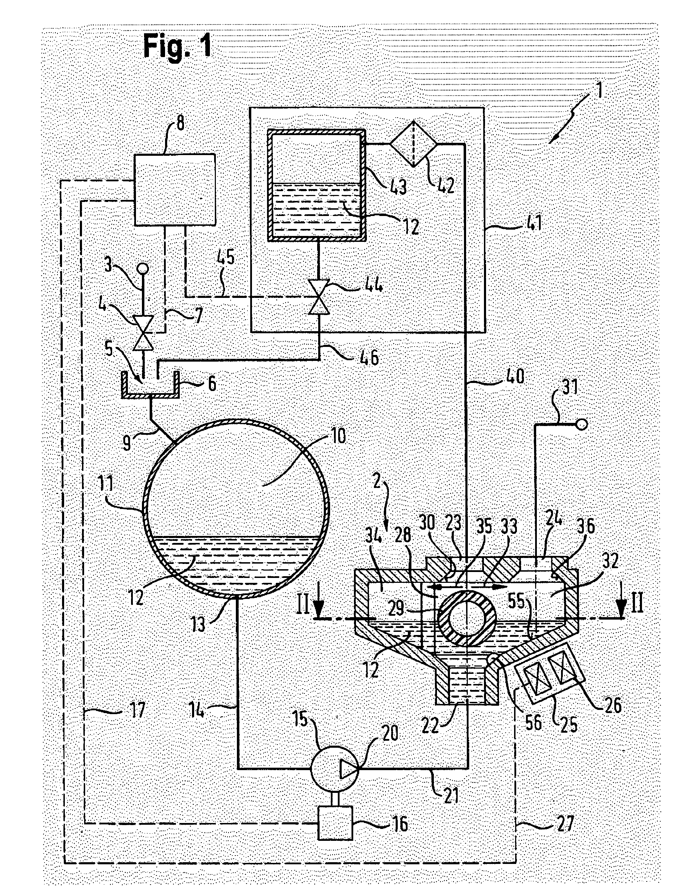

Fig. 1 zeigt ein wasserführendes Haushaltsgerät 1 mit einem Schaltventil 2 in einer auszugsweisen, schematischen Darstellung entsprechend einem Ausführungsbeispiel der Erfindung. Das Haushaltsgerät 1 kann insbesondere als Wäschebehandlungsgerät ausgestaltet sein und zum Waschen sowie gegebenenfalls zum Trocknen von Wäsche dienen. Speziell kann das Haushaltsgerät 1 als Waschmaschine, Waschvolltrockner oder Wäschetrockner oder Geschirrspüler ausgestaltet sein. Das Schaltventil 2 eignet sich besonders für solch ein Haushaltsgerät 1. Das Haushaltsgerät 1 und das Schaltventil 2 der Erfindung eignen sich allerdings auch für andere Anwendungsfälle.

Das Haushaltsgerät 1 weist eine Frischwasserleitung 3 auf, in der ein Sperrventil 4 angeordnet ist. Die Frischwasserleitung 3 führt über eine freie Luftstrecke 5 in eine Einspülschale 6. Das Sperrventil 4 ist über eine Steuerleitung 7 mit einer Steuerung 8 verbunden. Die Steuerung 8 steuert das Sperrventil 4 entsprechend einem Programmablauf an. Bei geöffnetem Sperrventil 4 fließt im Betrieb Frischwasser in die Einspülschale 6 und aus dieser über einen Stutzen 9 in einen Behandlungsbereich 10. Der Behandlungsbereich 10 ist in diesem Ausführungsbeispiel von einem Laugenbehälter 11 umschlossen.

In den Behandlungsbereich 10 kann beispielsweise Wäsche eingelegt werden. Mit dem Frischwasser kann ein Wäschebehandlungsmittel aus der Einspülschale 6 dann in den Behandlungsbereich 10 zu der Wäsche gespült werden. Hierdurch lässt sich der Laugenbehälter 11 mit einer Lauge 12 oder einer anderen Flüssigkeit 12, insbesondere einem Spülwasser, teilweise füllen.

Der Laugenbehälter 11 weist einen Abfluss 13 auf, der über eine Leitung 14 mit einer Pumpe 15 verbunden ist. Die Pumpe 15 ist in diesem Ausführungsbeispiel als Laugenpumpe ausgestaltet. Die Pumpe 15 wird von einem Motor 16 angetrieben. Hierbei ist der Motor 16 über eine Steuerleitung 17 mit der Steuerung 8 verbunden.

Der Motor 16 ist vorzugsweise als bürstenloser Gleichstrommotor 16 ausgestaltet. Hierbei weist der Motor 16 zumindest zwei verschiedene Drehgeschwindigkeiten auf, die sich entsprechend in unterschiedlichen Förderleistungen der Pumpe 15 auswirken. Speziell kann der Motor 16 die Pumpe 15 mit einer variablen Drehzahl antreiben. Hierdurch ist eine variable Förderleistung der Pumpe 15 ermöglicht. Eine Förderseite 20 der Pumpe 15 ist über eine Leitung 21 mit einem Eingang 22 des Schaltventils 2 verbunden. Das Schaltventil 2 weist außerdem einen ersten Ausgang 23 und einen zweiten Ausgang 24 auf.

Das Schaltventil 2 weist eine magnetische Betätigungseinrichtung 25 auf. Die magnetische Betätigungseinrichtung 25 umfasst in diesem Ausführungsbeispiel eine Magnetspule 26, die über eine Steuerleitung 27 mit der Steuerung 8 verbunden ist. Ferner weist das Schaltventil 2 einen Ventilraum 28 auf, in dem ein schwimmfähiger Ventilschließkörper 29 angeordnet ist. Der Ventilschließkörper 29 ist in diesem Ausführungsbeispiel als hohlkugelförmiger Ventilschließkörper 29 ausgestaltet. Hierbei besteht der Ventilschließkörper 29 beispielsweise aus einem Kunststoff, insbesondere einem weichelastischen Kunststoff, z.B. Silikon, in dem magnetisierbare Bestandteile, insbesondere ein Eisen- oder Ferritpulver, eingelagert sind. Der Ventilschließkörper 29 ist hierbei durch Magnetkraft von der Betätigungseinrichtung 25 anziehbar, aber vorzugsweise selbst nicht magnetisch.

In der Fig. 1 ist eine Situation dargestellt, in der der Ventilraum 28 teilweise mit der Lauge 12 gefüllt ist. Hierdurch schwimmt der Ventilschließkörper 29 in der Lauge 12 auf. In Bezug auf die Betriebslage des Schaltventils 2 beziehungsweise des wasserführenden Haushaltsgeräts 1 befindet sich der Eingang 22 unten, der erste Ausgang 23 befindet sich über dem Eingang 22 oben am Ventilraum 28 und der zweite Ausgang 24 befindet sich oben am Ventilraum neben dem ersten Ausgang 23. Durch Antreiben der Pumpe 15 steigt der Pegel der Lauge 12 in dem Ventilraum 28, so dass bei unbestromter Magnetspule 26 der Ventilschließkörper 29 an den ersten Ausgang 23 gelangt und dort mit einer Ventilsitzfläche 30 zu einem Dichtsitz zusammenwirkt. In diesem Fall ist der zweite Ausgang 24 geöffnet, so dass bei angetriebener Pumpe 15 die Lauge 12 über eine Abflussleitung 31, die mit dem zweiten Ausgang 24 verbunden ist, aus dem Haushaltsgerät 1 gepumpt werden kann.

Wenn die Magnetspule 26 der magnetischen Betätigungseinrichtung 25 bestromt wird, dann wird eine Magnetkraft auf den Ventilschließkörper 29 ausgeübt. Hierdurch gelangt der in der Lauge 12 aufschwimmende Ventilschließkörper 29 in eine erste Erweiterung 32 des Ventilraums 29. Die erste Erweiterung erstreckt sich von dem ersten Ausgang 23 in einer ersten Richtung 33 zu dem zweiten Ausgang 24. Der Ventilraum 28 weist in diesem Ausführungsbeispiel eine zweite Erweiterung 34 auf, die sich von dem ersten Ausgang 23 entgegen der ersten Richtung 33 in einer zweiten Richtung 35 erstreckt.

Die Magnetkraft der magnetischen Betätigungseinrichtung 25 und das Fördervolumen der Pumpe 15 beziehungsweise die Drehzahl des Motors 16 sind so aufeinander abgestimmt, dass der Ventilschließkörper 29 an den zweiten Ausgang 24 gelangt, wenn die Magnetspule 26 bestromt wird. Hierdurch bildet der Ventilschließkörper 29 bei gefülltem Ventilraum 28 einen Dichtsitz mit einer Ventilsitzfläche 36 am zweiten Ausgang 24. In diesem Fall ist der erste Ausgang 23 geöffnet, so dass die Lauge 12 über eine Leitung 40 in ein Umpump- und/oder Zwischenspeichersystem 41 gefördert wird. In diesem Ausführungsbeispiel weist das Umpump- und Zwischenspeichersystem 41 ein Filter 42, einen Zwischenspeicher 43 und ein Sperrventil 44 auf. Das Sperrventil 44 ist über eine Steuerleitung 45 mit der Steuerung 8 verbunden. Bei geschlossenem Sperrventil 44 kann somit über das Filter 42 geförderte Flüssigkeit 12, insbesondere Lauge 12 oder Spülwasser 12, in den Zwischenspeicher 43 gefördert werden. Speziell kann hierdurch Spülwasser vorübergehend in dem Zwischenspeicher 43 gespeichert werden, das gegebenenfalls zu einem späteren Zeitpunkt, insbesondere bei einem späteren Waschprogramm, wiederverwendet wird. Durch Öffnen des Sperrventils 44 gelangt die Flüssigkeit 12 aus dem Zwischenspeicher 43 über eine Leitung 46 und die freie Luftstrecke 5 in die Einspülschale 6. Über die Einspülschale 6 kann somit die in dem Zwischenspeicher 43 gespeicherte Flüssigkeit in den Behandlungsbereich 10 gelangen und hierbei gegebenenfalls Wäschebehandlungsmittel aus der Einspülschale 6 einspülen. Wenn das Sperrventil 44 während dem Pumpvorgang geöffnet ist, dann kann das Umpump- und/oder Zwischenspeichersystem 41 auch einfach zum Umpumpen der Flüssigkeit 12 dienen.

Je nach Ausgestaltung des Haushaltsgeräts 1 können das Filter 42 und/oder der Zwischenspeicher 43 und/oder das Sperrventil 44 auch entfallen. Speziell kann das Umpump- und/oder Zwischenspeichersystem 41 als reines Umpumpsystem 41 ausgestaltet sein, das keinen Zwischenspeicher 43 und kein Sperrventil 44 aufweist.

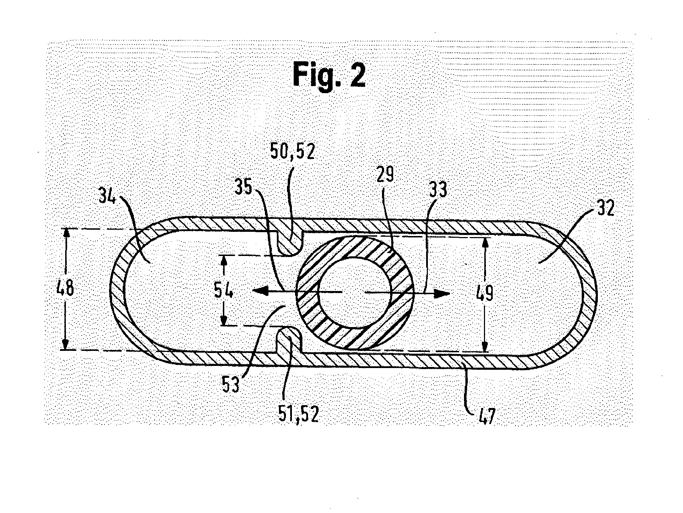

Die Ausgestaltung des Schaltventils 2 ist im Folgenden auch unter Bezugnahme auf die Fig. 2 weiter beschrieben.

Fig. 2 zeigt einen auszugsweisen, schematischen Schnitt durch das in Fig. 1 dargestellte Schaltventil 2 des wasserführenden Haushaltsgeräts 1 entlang der mit II bezeichneten Schnittlinie. Das Schaltventil 2 weist einen Grundkörper 47 auf, der den Ventilraum 28 einschließt. In diesem Ausführungsbeispiel weist der Grundkörper 47 entlang der mit II bezeichneten Schnittlinie einen länglichen Querschnitt auf, wobei eine Breite 48 des Ventilraums 28 etwas größer ist als ein Durchmesser 49 des Ventilschließkörpers 29. Ferner sind an dem Grundkörper 47 nach innen gerichtete Rippen 50, 51 ausgestaltet, die eine Führung 52 für den Ventilschließkörper 29 bilden. Zwischen den beiden Rippen 50, 51 ist eine Verengung 53 mit einer Öffnungsbreite 54 gebildet, die schmaler ist als der Durchmesser 49 des Ventilschließkörpers 29. Dies bedeutet, dass die Öffnungsbreite 54 kleiner ist als der Durchmesser 49 des Ventilschließkörpers 29. Somit wird der Ventilschließkörper 29 durch die Führung 52 am Eindringen in die zweite Erweiterung 34 des Ventilraums 28 gehindert.

Die erste Erweiterung 32 und die zweite Erweiterung 34 sind zumindest näherungsweise gleich groß ausgestaltet. Vorzugsweise ist die erste Erweiterung 32 nicht kleiner als die zweite Erweiterung 34 ausgestaltet. Beim Einströmen der Flüssigkeit 12 in den Ventilraum 28 ergeben sich hierdurch ausgeglichene Strömungsverhältnisse oder Strömungsverhältnisse, die den Ventilschließkörper 29 gegen die Führung 52 drücken. Bei deaktivierter Betätigungseinrichtung 25, also unbestromter Spule 26, wird der Ventilschließkörper 29 dann zuverlässig von dem Eingang 22 zu dem ersten Ausgang 23 mittels der Führung 52 geführt. Hierdurch wird stets ein Verschließen des ersten Ausgangs 23 und ein offener zweiter Ausgang erzielt. Dies entspricht vorzugsweise einer häufig benutzten Schaltstellung des Schaltventils 2.

Nur wenn ein Verschließen des zweiten Ausgangs 24 erforderlich ist, dann muss die magnetische Betätigungseinrichtung 25 aktiviert werden. Aber selbst dann kann bei ausreichendem Förderdruck der Pumpe 15 der Ventilschließkörper 29 allein aufgrund des Drucks der Flüssigkeit 12 im Ventilraum 28 gegen die Ventilsitzfläche 36 gepresst werden, wodurch der Dichtsitz zwischen der Ventilsitzfläche 36 und dem Ventilschließkörper 29 gebildet ist. Ab diesem Zeitpunkt kann dann die magnetische Betätigungseinrichtung 25 deaktiviert werden. Dadurch verringert sich der Energieverbrauch und dies macht den Einsatz einer geringeren Menge an Kupfer in der Magnetspule 26 möglich.

Der Ventilraum 28 ist unten von einer auf den Eingang 22 zulaufenden, geneigten Unterseite des Grundkörpers 47 begrenzt. Außerdem ist an dem Eingang 22 eine asymmetrische Auflage 56 für den Ventilschließkörper 29 vorgesehen. Durch die asymmetrische Auflage 56 wird ein vollständiges Verschließen des Eingangs 22 von dem Ventilschließkörper 29 verhindert. Hierdurch wird ein Rückfluss der Flüssigkeit 12 aus dem Ventilraum 28 über den Eingang 22 zurück in die Leitung 21 ermöglicht. Zusammen mit der geneigten Unterseite 55 gelangt der Ventilschließkörper 29 hierdurch stets in eine vorgegebene Ausgangsstellung am Eingang 22, bei der ein vollständiges Abfließen der Flüssigkeit 12 möglich ist.

Somit eignet sich das Schaltventil 2 besonders zum Steuern von Abwasserströmen von vorzugsweise einer Quelle in vorzugsweise zwei Ausgänge 23, 24. Hierbei ist eine geringe Baugröße und eine robuste Bauart ermöglicht. Speziell besteht eine Unempfindlichkeit gegenüber Verschmutzung, beispielsweise durch Haare oder Flusen. Außerdem ist eine einfache und energiearme Betätigungseinrichtung 25 realisierbar. Ein Steuern der Abwasserströme kann insbesondere genutzt werden, um Teile des Abwassers, etwa das letzte Spülwasser, einer weiteren Verwendung zuzuführen. Auch eine sofortige Wiederverwendung durch Umpumpen ist möglich. Somit wird der Wasserverbrauch verringert.

Der Ventilschließkörper 29 kann aus einem weichelastischen Material hergestellt sein. Dadurch kann eine Dichtwirkung an den Ausgängen 23, 24 verbessert werden. Die asymmetrische Auflage 56 kann in Form eines Abstandhalters 56 realisiert sein, der Teil des Grundkörpers 47 ist. Durch den ermöglichten Rückfluss kann beispielsweise ein Schließdruck für einen Sumpfverschluss (nicht dargestellt) des wasserführenden Haushaltsgeräts 1 aufgebracht werden. Die asymmetrische Auflage 56 des Ausführungsbeispiels ist außerdem so ausgestaltet, dass der anfängliche Abwasserstrom in der ersten Richtung 33 in die erste Erweiterung 32 gerichtet ist. Hierdurch wird bereits am Anfang eine resultierende Kraft auf den Ventilschließkörper 29 ausgeübt, die diesen in Richtung auf die Führung 52 beaufschlagt. Hierdurch steigt der Ventilschließkörper 29 bei unbestromter Magnetspule 26 entlang der Führung 52, insbesondere senkrecht nach oben. Somit ergibt sich eine hohe Schaltsicherheit.

Durch die symmetrische Füllung des Ventilraums 28 muss von der magnetischen Betätigungseinrichtung 25 nur die viskose Reibung beziehungsweise die Beschleunigung des Ventilschließkörpers 29 aufgebracht werden. Dies lässt sich gegen die Schaltzeit ausspielen, so dass die Stärke der magnetischen Betätigungseinrichtung 25 klein sein kann und somit die Magnetspule 26 Kupfer sparend ausgelegt werden kann.

Wenn einer der Ausgänge 23, 24 verschlossen ist, dann wird durch die weitere Förderung der Flüssigkeit 12 eine Flüssigkeitssäule im jeweils nicht versperrten Teil des Systems oberhalb des Grundkörpers 47 des Schaltventils 2 aufgebaut. Der dadurch entstehende Druck sorgt für eine zusätzliche Dichtkraft. Außerdem trägt der Staudruck durch den Volumenstrom zum Dichtdruck an der jeweiligen Ventilsitzfläche 30, 36 bei. Durch entsprechende Wahl des Durchmessers der Berührlinie an der Ventilsitzfläche 30, 36 im Dichtsitz baut sich insgesamt eine entsprechend hohe Dichtkraft auf. Beispielsweise kann bei einem großen Durchmesser 49 des Ventilschließkörpers 29 ein Dichtsitzkonus an den Ventilsitzflächen 30, 36 mit einem Winkel von zumindest näherungsweise 90° vorgesehen sein. Somit ist das Schaltventil 2 durch vorübergehendes Aktivieren der magnetischen Betätigungseinrichtung 25 schaltbar und dann selbsthaltend und selbstdichtend ausgelegt. Das daraus resultierende kurze Puls- und Pausenverhältnis schont die Bauteile und lässt eine weitere Verkleinerung der Magnetspule 26 zu.

Durch die Ausgestaltung des Motors 16 als bürstenloser Gleichstrommotor 16 kann der Volumenstrom von der Steuerung 8 gezielt eingestellt werden. Speziell kann der Volumenstrom während des Schaltvorgangs des Schaltventils 2 temporär auf bezüglich der Strömung unkritische Werte reduziert werden. Zusätzlich kann durch diese Maßnahme auch die zum Umschalten aufzubringende Magnetkraft deutlich reduziert werden, da die Schaltzeiten entsprechend größer werden. Der im Umschaltzustand frei schwimmende Ventilschließkörper 29 muss für die Querbewegung nur die viskose Flüssigkeitsreibung überwinden, die proportional zur Geschwindigkeit beziehungsweise einer Potenz zwischen 1 und 2 davon ist und daher für kleine Geschwindigkeiten gegen null geht.

Das Haushaltsgerät 1 kann auch als Geschirrspüler ausgestaltet sein. Auch in diesem Fall kann das Schaltventil 2 in vorteilhafter Weise zum Umschalten zwischen einem Umpumpen und einem Abpumpen zum Einsatz kommen. Außerdem eignet sich das Schaltventil 2 generell für Wasser speichernde Systeme, bei denen ein Umschalten zwischen Abpumpen und Speichern möglich ist, wobei durch das Filter 42 eine vorherige Reinigung des Wassers erfolgen kann.

Außerdem können mehrere Schaltventile 2 entsprechend einer Kaskadenanordnung verschaltet werden, um eine größere Anzahl an Verzweigungen zu erzielen. Außerdem kann auch eine größere Anzahl an Ausgängen für den Ventilraum 28 an dem Schaltventil 2 realisiert werden. Hierbei können eine entsprechend größere Anzahl an Ventilschließkörpern 29 in dem Ventilraum 28 angeordnet werden.

Die magnetische Betätigungseinrichtung 25 kann auch durch einen mechanisch bewegten Permanentmagneten zum Verändern der Lage des Ventilschließkörpers 29 realisiert werden. Vorzugsweise weist das Schaltventil 2 allerdings genau einen Eingang 22 und genau zwei Ausgänge 23, 24, nämlich den ersten Ausgang 23 und den zweiten Ausgang 24 auf.

In vorteilhafter Weise kann das Schaltventil 2 ohne verstopfungsempfindliche Umlenkungen oder zusätzliche Rückstellelemente, beispielsweise Federn, ausgestaltet werden. Hierdurch ergibt sich ein robuster und kostengünstiger Aufbau. Außerdem ist die Ausgestaltung dahingehend robust, dass Fremdkörper, insbesondere Haare oder Flusen, durch den Ventilraum 28 hindurchgeführt werden können, ohne dass diese hängenbleiben. Die magnetische Beeinflussung des Ventilschließkörpers 29 ermöglicht außerdem eine geschlossene Ausgestaltung des Grundkörpers 47. Hierdurch wird ein wasserdichter Aufbau ohne mechanische Gehäusedurchführungen, die eine potenzielle Leckagestelle darstellen, ermöglicht.

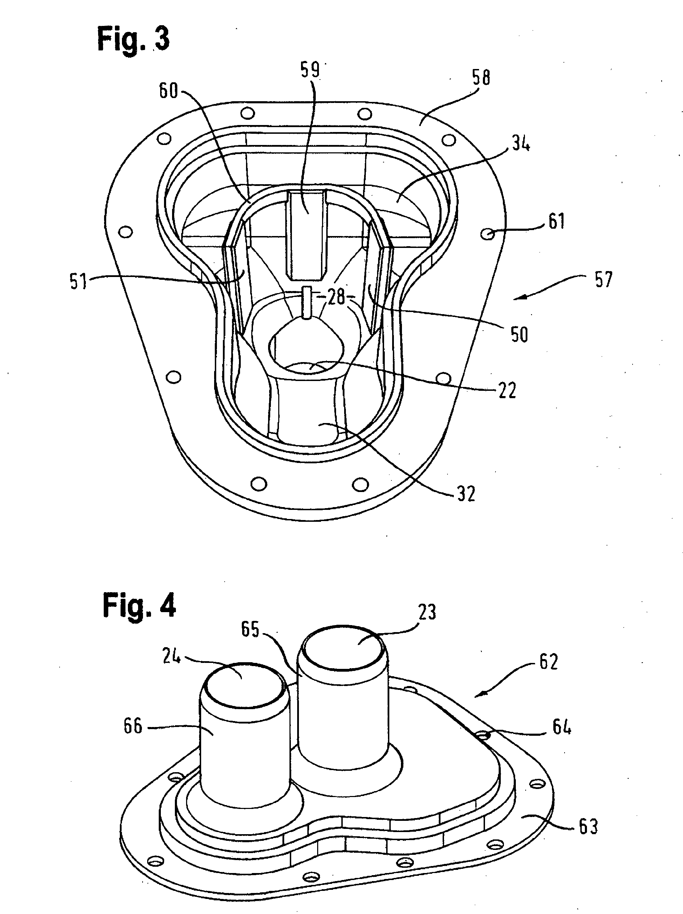

Figur 3 zeigt in perspektivischer Ansicht das Unterteil 57 eines erfindungsgemäßen Schaltventils 2 gemäß einer Ausführungsform. Zur Befestigung an einem Oberteil (siehe Figur 4) ist hier ein Befestigungsflansch 58 mit Bohrungen 61 zu sehen. Dieser Flansch 58 ist jedoch optional, im Regelfall wird das Gehäuse des Ventils 2 spritzgegossen sein, oder, wenn es aus mehreren Teilen besteht, können diese verklebt oder verschweißt werden. Die Ansicht zeigt das Unterteil 57 von schräg oben, man sieht demnach den Eingang 22 zum Ventilraum 28.

Es ist weiterhin eine erste Erweiterung 32 zu sehen. Anders als in der schematischen Darstellung von Figur 2 ist die zweite Erweiterung 34 in diesem Fall auf zwei gewölbte Bereiche verteilt. Im Querschnitt ergibt sich so eine Art "Birnenform". Die erste Erweiterung 32 ist von der Größe des Ventilschließkörpers bestimmt, da der Ventilschließkörper genug Platz haben muss, um die erste Erweiterung 32 zu durchqueren, um den zweiten Ausgang 24 zu erreichen. Die zweite Erweiterung 34 ist in dieser Hinsicht nicht eingeschränkt, da sie als Ausgleichsvolumen benötigt wird, und kann daher eine andere Form haben als die erste Erweiterung 32. Dies ist vorteilhaft, weil das Ventil 2 so platzsparender gestaltet werden kann. Wie bereits erwähnt, kommt es auf die Volumensymmetrie an, damit ein Ventilschließkörper vom Eingang 22 senkrecht schwimmend aufsteigen kann.

Als Führungen sind hier drei Rippen 50, 51 und 59 vorgesehen. Weiterhin gezeigt ist eine optionale Rippenversteifung 60. Bei einem herkömmlichen für derartige Ventilgehäuse verwendeten Material ist dieses stabil genug, sodass auf die Rippenversteifung 60 verzichtet werden kann.

Figur 4 zeigt das zu dem Untereil 57 gehörige Schaltventilgehäuseoberteil 62. Auch dieses weist einen Befestigungsflansch 63 mit Bohnrungen 64 auf. Für diese Elemente gilt das oben gesagte. Für die beiden Ausgänge 23 und 24 sind hier Anschlussstutzen 65 und 66 vorgesehen. Es ist erkennbar, dass der Ausgang 23 bei einem zusammengesetzten und korrekt ausgerichteten Schaltventil senkrecht oberhalb der Eingangs 22 angeordnet ist. Durch die Gestaltung des Ventilraums 28 , speziell der Verteilung der beiden Erweiterungen 32 und 34 werden derartige Strömungsverhältnisse beim Einströmen von Flüssigkeit durch den Eingang 22 gewährleistet, die dazu führen, dass ein in dem Ventilraum 28 angeordneter Ventilschließkörper senkrecht aufschwimmt und ohne Ablenkung durch beispielsweise eine Betätigungseinrichtung den ersten Ausgang 23 erreicht und diesen dichtend verschließen kann, wenn der gesamte Ventilraum 28 gefüllt ist. Die Flüssigkeit strömt dann durch den zweiten Ausgang 24 aus.

### Bezugszeichenliste

- 1: Wasserführendes Haushaltsgerät
- 2: Schaltventil
- 3: Frischwasserleitung
- 4: Sperrventil
- 5: freie Luftstrecke
- 6: Einspülschale
- 7: Steuerleitung
- 8: Steuerung
- 9: Stutzen
- 10: Behandlungsbereich
- 11: Laugenbehälter
- 12: Lauge
- 13: Abfluss
- 14: Leitung
- 15: Pumpe
- 16: Motor
- 17: Steuerleitung
- 20: Förderseite
- 21: Leitung
- 22: Eingang
- 23: erster Ausgang
- 24: zweiter Ausgang
- 25: magnetische Betätigungseinrichtung
- 26: Magnetspule
- 27: Steuerleitung
- 28: Ventilraum
- 29: Ventilschließkörper
- 30: Ventilsitzfläche
- 31: Abflussleitung
- 32: erste Erweiterung
- 33: erste Richtung
- 34: zweite Erweiterung
- 35: zweite Richtung
- 36: Ventilsitzfläche
- 40: Leitung
- 41: Umpump- und/oder Zwischenspeichersystem
- 42: Filter
- 43: Zwischenspeicher
- 44: Sperrventil
- 45: Steuerleitung
- 46: Leitung
- 47: Grundkörper
- 48: Breite
- 49: Durchmesser
- 50: Rippe
- 51: Rippe
- 52: Führung
- 53: Verengung
- 54: Öffnungsbreite
- 55: Unterseite
- 56: asymmetrische Auflage
- 57: Schaltventilgehäuseunterteil
- 58: Befestigungsflansch
- 59: Rippe
- 60: Rippenversteifung
- 61: Bohrung
- 62: Schaltventilgehäuseoberteil
- 63: Befestigungsflansch
- 64: Bohrung
- 65: Anschlussstutzen für den ersten Ausgang 23
- 66: Anschlussstutzen für den zweiten Ausgang 24

## Patentansprüche

1. Schaltventil (2) für ein wasserführendes Haushaltsgerät mit einem Ventilraum (28), zumindest einem in dem Ventilraum (28) angeordneten Ventilschließkörper (29), einer Betätigungseinrichtung (25) für den Ventilschließkörper (29), zumindest einem Eingang (22), einem ersten Ausgang (23) und zumindest einem zweiten Ausgang (24), wobei der Eingang (22), der erste Ausgang (23) und der zweite Ausgang (24) dem Ventilraum (28) zugeordnet sind und wobei in einer Betriebslage der Eingang (22) unten an dem Ventilraum (28) angeordnet ist, der erste Ausgang (23) oben an dem Ventilraum (28) angeordnet ist und der zweite Ausgang (24) neben dem ersten Ausgang (23) oben an dem Ventilraum (28) angeordnet ist, wobei der Ventilschließkörper (29) ein schwimmfähiger Ventilschließkörper (29) ist, und wobei der Ventilraum (28) so ausgestaltet ist, dass der Ventilschließkörper (29) beim Aufschwimmen den ersten Ausgang (23) verschließt, **dadurch gekennzeichnet, dass** der erste Ausgang (23) in der Betriebslage senkrecht oberhalb des Eingangs (22) angeordnet ist, dass der Ventilraum (28) in einer ersten Richtung (33) von dem ersten Ausgang (23) zu dem zweiten Ausgang (24) eine erste Erweiterung (32) aufweist und dass der Ventilraum (28) eine zweite Erweiterung (34) aufweist, deren Volumen mindestens das der ersten Erweiterung (32) ist, und dass der Ventilraum (28) eine solche Volumenverteilung aufweist, dass der Ventilschließkörper (29) beim Aufschwimmen eine senkrechte Bahn verfolgt.

2. Schaltventil nach Anspruch 1, **dadurch gekennzeichnet, dass** die zweite Erweiterung (34) ein größeres Volumen aufweist als die erste Erweiterung (32).

3. Schaltventil nach einem der vorhergehenden Ansprüche, **dadurch gekennzeichnet, dass** eine Führung (52) vorgesehen ist, die zum Führen des aufschwimmenden Ventilschließkörpers (29) an den ersten Ausgang (23) dient.

4. Schaltventil nach Anspruch 3, **dadurch gekennzeichnet, dass** die Führung (52) zumindest eine Rippe (50, 51, 59) aufweist und/oder dass die Führung (52) eine Verengung (53) in dem Ventilraum (28) bildet, die den Ventilschließkörper (29) am Eindringen in die zweite Erweiterung (34) hindert.

5. Schaltventil nach einem der vorhergehenden Ansprüche, **dadurch gekennzeichnet, dass** die Betätigungseinrichtung (25) zum Bewegen des Ventilschließkörpers (29) gegen den zweiten Ausgang (24) dient, wenn der Ventilschließkörper (29) aufschwimmt.

6. Schaltventil nach einem der vorhergehenden Ansprüche, **dadurch gekennzeichnet, dass** die Betätigungseinrichtung (25) als magnetische Betätigungseinrichtung (25) ausgestaltet ist, dass der Ventilschließkörper (29) von der Betätigungseinrichtung (25) magnetisch anziehbar ist.

7. Schaltventil nach einem der vorhergehenden Ansprüche, **dadurch gekennzeichnet, dass** an dem Eingang (22) eine asymmetrische Auflage (56) für den Ventilschließkörper (29) vorgesehen ist, die ein vollständiges Verschließen des Eingangs (22) von dem Ventilschließkörper (29) verhindert.

8. Wasserführendes Haushaltsgerät (1) mit einem Schaltventil (2) nach einem der vorhergehenden Ansprüche.

9. Wasserführendes Haushaltsgerät nach Anspruch 8, **dadurch gekennzeichnet, dass** eine Pumpe (15) vorgesehen ist, dass eine Förderseite (20) der Pumpe (15) mit dem Eingang (22) des Schaltventils (2) verbunden ist und dass die Pumpe (15) eine variable Förderleistung aufweist.

## Claims

1. Switching valve (2) for a water-conducting household appliance with a valve chamber (28), at least one valve closure body (29) disposed in the valve chamber (28), an actuation device (25) for the valve closure body (29), at least one inlet (22), a first outlet (23) and a least one second outlet (24), wherein the inlet (22), the first outlet (23) and the second outlet (24) are assigned to the valve chamber (28) and wherein, in an operating position, the inlet (22) is disposed at the bottom on the valve chamber (28), the first outlet (23) is disposed at the top on the valve chamber (28) and the second outlet (24) is disposed next to the first outlet (23) at the top of the valve chamber (28), wherein the valve closure body (29) is a floating valve closure body (29), and wherein the valve chamber (28) is embodied so that the valve closure body (29), when it floats upwards, closes off the first outlet (23), **characterised in that** the first outlet (23), in the operating position, is disposed vertically above the inlet (22), that the valve chamber (28), in a first direction (33) from the first outlet (23) to the second outlet (24) has a first expansion (32) and that the valve chamber (28) has a second expansion (34), of which the volume is at least that of the first expansion (32), and that the valve chamber (28) has a volume distribution such that the valve closure body (29) follows a vertical path as it floats upwards.

2. Switching valve according to claim 1, **characterised in that** the second expansion (34) has a greater volume than the first expansion (32).

3. Switching valve according to one of the preceding claims, **characterised in that** a guide (52) is provided, which serves to guide the valve body (29) to the first output (23) as it floats upwards.

4. Switching valve according to claim 3, **characterised in that** the guide (52) has at least one rib (50, 51, 59) and/or that the guide (52) forms a constriction (53) in the valve chamber (28), which prevents the valve closure body (29) penetrating into the second expansion (34).

5. Switching valve according to one the preceding claims, **characterised in that** the actuation device (25) serves to move the valve closure body (29) against the second outlet (24) when the valve closure body (29) is floating upwards.

6. Switching valve according to one the preceding claims, **characterised in that** the actuation device (25) is embodied as a magnetic actuation device (25), that the valve closure body (29) is able to be magnetically attracted by the actuation device (25).

7. Switching valve according to one the preceding claims, **characterised in that** an asymmetrical support (56) is provided at the inlet (22) for the valve closure body (29) which prevents a complete closure of the inlet (22) by the valve closure body (29).

8. Water-conducting household appliance (1) with a switching valve (2) according to one of the preceding claims.

9. Water-conducting household appliance according to claim 8, **characterised in that** a pump (15) is provided, that a delivery side (20) of the pump (15) is connected to the inlet (22) of the switching valve (2) and that the pump (15) has a variable delivery rate.

## Revendications

1. Soupape de commutation (2) pour un appareil ménager utilisant de l'eau avec une chambre de soupape (28), au moins un corps de fermeture de soupape (29) disposé dans la chambre de soupape (28), un dispositif d'actionnement (25) pour le corps de fermeture de soupape (29), au moins une entrée (22), une première sortie (23) et au moins une deuxième sortie (24), dans laquelle l'entrée (22), la première sortie (23) et la deuxième sortie (24) sont associées à la chambre de soupape (28) et dans laquelle, dans une position de fonctionnement, l'entrée (22) est disposée au bas de la chambre de soupape (28), la première sortie (23) est disposée dans le haut de la chambre de soupape (28) et la deuxième sortie (24) est disposée dans le haut de la chambre de soupape (28) à côté de la première sortie (23), dans laquelle le corps de fermeture de soupape (29) est un corps de fermeture de soupape flottant (29), et dans laquelle la chambre de soupape (28) est configurée de telle manière que le corps de fermeture de soupape (29) ferme la première sortie (23) lorsqu'il flotte, **caractérisée en ce que** la première sortie (23) est disposée verticalement au-dessus de l'entrée (22) dans la position de fonctionnement, **en ce que** la chambre de soupape (28) présente un premier élargissement (32) dans une première direction (33) de la première sortie (23) vers la deuxième sortie (24) et **en ce que** la chambre de soupape (28) présente un deuxième élargissement (34), dont le volume est au moins celui du premier élargissement (32), et **en ce que** la chambre de soupape (28) présente une telle distribution de volume que le corps de fermeture de soupape (29) suit une trajectoire verticale lorsqu'il flotte.

2. Soupape de commutation selon la revendication 1, **caractérisée en ce que** le deuxième élargissement (34) présente un plus grand volume que le premier élargissement (32).

3. Soupape de commutation selon l'une quelconque des revendications précédentes, **caractérisée en ce qu'**il est prévu un guide (52), qui permet de guider le corps de fermeture de soupape flottant (29) à la première sortie (23).

4. Soupape de commutation selon la revendication 3, **caractérisée en ce que** le guide (52) présente au moins une nervure (50, 51, 59) et/ou **en ce que** le guide (52) forme dans la chambre de soupape (28) un étranglement (53), qui empêche le corps de fermeture de soupape (29) de pénétrer dans le deuxième élargissement (34).

5. Soupape de commutation selon l'une quelconque des revendications précédentes, **caractérisée en ce que** le dispositif d'actionnement (25) permet de déplacer le corps de fermeture de soupape (29) contre la deuxième sortie (24), lorsque le corps de fermeture de soupape (29) flotte.

6. Soupape de commutation selon l'une quelconque des revendications précédentes, **caractérisée en ce que** le dispositif d'actionnement (25) est configuré sous forme de dispositif d'actionnement magnétique (25) et **en ce que** le corps de fermeture de soupape (29) peut être attiré magnétiquement par le dispositif d'actionnement (25).

7. Soupape de commutation selon l'une quelconque des revendications précédentes, **caractérisée en ce qu'**il est prévu à l'entrée (22) un appui asymétrique (56) pour le corps de fermeture de soupape (29), qui empêche une fermeture totale de l'entrée (22) par le corps de fermeture de soupape (29).

8. Appareil ménager utilisant de l'eau (1) doté d'une soupape de commutation (2) selon l'une quelconque des revendications précédentes.

9. Appareil ménager utilisant de l'eau selon la revendication 8, **caractérisé en ce qu'**il est prévu une pompe (15), **en ce qu'**un côté de refoulement (20) de la pompe (15) est raccordé à l'entrée (22) de la soupape de commutation (2) et **en ce que** la pompe (15) présente une capacité de transport variable.
